# EUROPEAN PATENT SPECIFICATION

(11) **EP 0 412 601 B1**
(45) Date of publication and mention of the grant of the patent: **08.12.1993**
(21) Application number: 90202085.8
(22) Date of filing: 31.07.1990
(51) Int. Cl.: B29C 33/14, B29C 67/18, B29C 39/10

(54) **Procedure for the application of symbols in objects of synthetic material, device hereby applied, as well as products obtained through this**
Verfahren zum Anbringen von Symbolen in Gegenständen aus synthetischem Material, Vorrichtung dafür und hergestellte Gegenstände
Procédé pour appliquer des symboles dans des articles en matière synthétique, dispositif utilisé et article obtenu

(30) Priority: 10.08.1989 BE 8900859
(43) Date of publication of application: 13.02.1991
(73) Proprietor: Gezels, Jean, Marie, José, B-9000 Gent (BE); Leen, Richard, B-2400 Mol (BE)
(72) Inventor: Gezels, Jean Marie José, B-9000 Gent (BE)
(74) Representative: Donné, Eddy

(56) References cited:
- EP-A- 0 041 004
- EP-A- 0 213 478
- FR-A- 1 496 387
- FR-A- 2 209 325
- FR-A- 2 624 783
- US-A- 3 403 883
- PATENT ABSTRACTS OF JAPAN, vol. 9, no. 25 (M-355)[1748], 2nd February 1985; & JP-A-59 169 830 (CITIZEN TOKEI) 25-09-1984

## Description

### Process for the application of inserts in objects of synthetic material, apparatus hereby applied, as well as products obtained through this.

This invention relates to a process for the application of inserts, such as characters, numerals, emblems, logos, inscriptions and such in objects of synthetic material. It also concerns an apparatus for the implementation of this process as well as the products which are provided with an insert according to this process.

Although the invention can be applied for all kinds of objects, it is in the first place intended for the application of such inserts in pallet chocks.

It is known that pallet chocks can be manufactured of synthetic material. In order to provide these chocks with symbols, they can be printed with such symbols. This process however shows the disadvantage that the printing can be applied with difficulty because the chocks must first be chemically treated in order that the printing would hold. Furthermore such printing wears away almost immediately under the mechanical pressure of the forks of forklift trucks.

The present invention relates to a process for the application of inserts in objects of synthetic material, which in general is intended for all kinds of objects, and which is more suitable for the application of inserts in pallet chocks, through which the aforementioned disadvantages are excluded.

The application of inserts in objects is known from FR-A-1.496.387 and JP-A-59 169830. These documents relate to processes using movable supporting means for fixing inserts in moulds. The use of such movable supporting means, however, has several disadvantages, such as a less reliable fixation.

The present invention relates to a process in which said disadvantages are excluded.

The invention is hereby also intended for a process which is suitable for mass production.

To this end the invention relates to a process for the application of inserts in objects of synthetic material, characterized in that it principally consists in providing a mould comprising fixedly mounted supporting means, said supporting means being located at a predetermined distance from a wall of said mould; providing an insert, which may be mounted on a holder, said insert and/or the holder showing a dimension that it fits exactly between said wall and said supporting means; placing said insert, when necessary with said holder, in the mould by inserting it, by means of a sliding movement, between the wall and the supporting means, said supporting means holding the insert in its final position; filling the mould with synthetic material; and extracting the formed object, comprising the insert or the insert mounted on the holder, from the mould.

The insert is preferably attached to a holder, or produced as one piece with this, whereby the holder and the insert can be slid precisely between the supporting means and the wall of the mould. The holder guarantees a permanent anchoring.

The present invention also relates to an apparatus for realizing the process, more especially to moulds which are equipped with the aforementioned supporting means, as well as to the accessories utilized hereby such as the aforementioned holder.

The aforementioned supporting means preferably consists of special supports such as auxiliary rods or support plates which are mounted parallel to the wall of the mould, but can also be formed of the core piece of the mould that is intended for creating a hollow in the piece to be formed. Preferably the aforementioned holder consists of at least a number of ribs which with the installation of the holder fit into grooves in the supporting means, such that the holder and the insert installed thereon can no longer move during the injection of the synthetic material.

In order to show better the characteristics according to the present invention, some preferred embodiments are described hereafter, as examples without any restrictive character, with reference to the enclosed drawings, in which:
Figure 1 shows an apparatus according to the invention, more especially for the application of inserts in pallet chocks;
figure 2 shows the apparatus from figure 1 whereby the holder of the insert is mounted in the mould ;
figure 3 shows a section according to line III-III in figure 2;
figure 4 shows the apparatus from figure 3, whereby the mould is filled with synthetic material;
figure 5 shows the object as obtained from the mould from figure 4;
figures 6 and 7 show different variants of holders for the aforementioned inserts;
figures 8 through 11 show variants according to a view analogue to that from figure 3;
figure 12 shows the apparatus from figure 11, whereby the mould is filled with two types of synthetic material;
figures and 14 show the object as obtained from the mould from figure 12;
figures 15-16, 17-18, and 19-20 show various pallet chocks which according to the invention are provided with an insert ;
figure 21 shows the utilization of the pallet chock from figure 19 in a pallet.

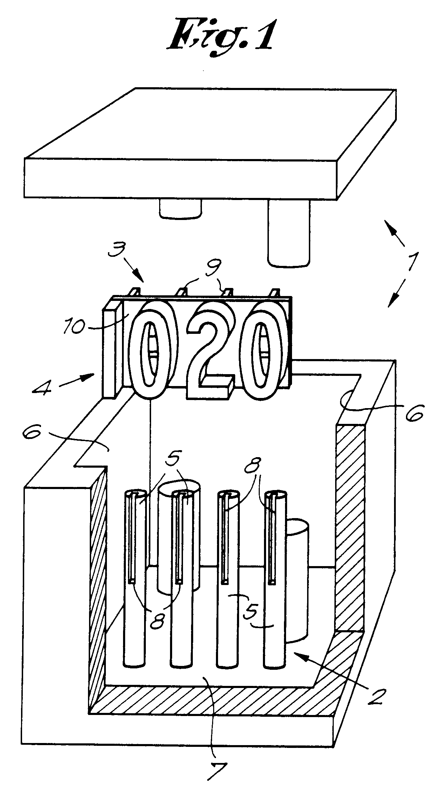

As shown in figure 1 according to the invention use is made of an apparatus consisting of a mould 1 which is intended for the formation of the object, in which according to the invention supporting means 2 are mounted. Further, use is preferably made of a holder 3 which is provided with the insert 4 to be applied in the wall of the object, that in the example shown consists of a number. The insert 4 is manufactured of a well defined material preferably of synthetic material, and in a color which is different from the object still to be formed.

In the embodiment from figure 1 the aforementioned supporting means 2 consist of auxiliary rods 5 which extend vertically into the mould 1, parallel to the wall 6 of the mould 1, whereby these auxiliary rods 5 are for example produced in one piece with the bottom 7 of the mould. The auxiliary rods 5 preferably each show a longitudinal groove 8 which extends from the free extremity of the auxiliary rod 5 in question up to a well defined distance from the bottom 7, and which is directed toward the wall of the mould 1.

The holder 3 consists of one or several, in this case four, vertical ribs 9, which are respectively situated in planes which are perpendicular to the wall 6 of the mould. In the embodiment shown the insert 4 is attached to the ribs 9 by means of an auxiliary frame 10, which on the one hand is attached against the ribs 9 or produced in one piece therewith and which on the other hand holds the insert 4, in this case various numbers.

The dimensions of the holder 3 and the insert 4 and the positioning of the supporting means 2 are such that the holder 3 and the insert 4 installed thereon fits exactly between the supporting means 2 and the wall 6 of the mould 1, such that they can be slid or pressed between them.

The utilization of the aforementioned apparatus in other words the process according to the invention, can easily be deduced from figures 1 through 5. First in the opened position of the mould 1 the holder 3 with the insert 4 is slid between the auxiliary rods 5 and the wall 6, such that the insert 4 presses against the side wall 6, whereby the ribs 8 fit precisely into the grooves 8. The grooves 8 in this manner provide for a horizontal positioning of the insert 4, as well as for a vertical positioning because of the fact that they cease to exist at a well defined distance from the bottom 7, such that the holder 3 can be slid to a well defined depth between the supporting means 2 and the wall 6 of the mould 1. Because of this a condition arises as shown in figures 2 and 3.

Subsequently the mould is closed and filled with synthetic material 11 which shown in figure 4 flows around the holder 3 and the insert 4, with exception of the front of the insert 4 which is against the wall 6 of the mould 1. The insert 4, that as well as the holder 3 preferably consists of synthetic material, is not damaged in front by the heat because the solid wall 6 provides a sufficiently great cooling. The holder 3 and the back of the insert 4 are however considerably heated, through which their surface becomes sticky and to a certain extent adheres to the solidifying injected synthetic material.

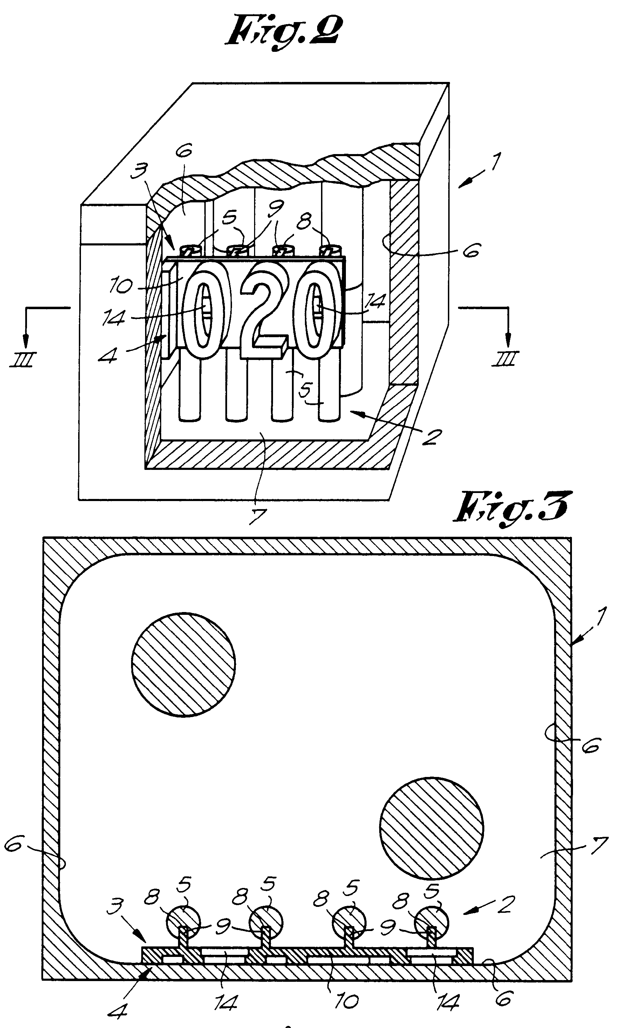

Subsequently the mould 1 in closed position passes through various work stations in order to cool off. After cooling the mould 1 is opened and the formed object, that in the embodiment shown consists in a pallet chock 12, is pushed out of the mould, with as result that an object is created with a section as shown in figure 5. At the locations of the auxiliary rods 5 a number of small holes 13 are created in the pallet chock 12 which show signs of the locations where the auxiliary rods were. These holes have no influence on the quality of the piece.

The process according to the invention offers the advantage that the insert 4 is permanently attached in the pallet chock 12. In the embodiment from figures 1 through 5 an anchoring is obtained which is threefold, respectively because of the fact that the ribs 9 are cast in the synthetic material 11, because of the fact that the synthetic material 11 runs up to the auxiliary frame 10 and because of the fact that a fusion occurs.

Because the synthetic material 11 would entirely fill up the space between the auxiliary frame 10 and the wall 6 of the mould 1 passage openings 14 are preferably installed in the auxiliary frame 10.

In figure 6 a variant of the holder 3 is shown, with as particular characteristic that a pushing plate 15 is present on top of the ribs 9, with which a relatively large pressure force can be exerted on the holder 3 and the insert 4 with the installation of them in the mould 1.

In order to obtain a still better anchoring of the insert 4 in the object, more especially the pallet chock 12, the insert 4 is, or the component parts hereof are provided with beveled edges 16 in front.

It is clear that the utilization of the auxiliary frame 10 is not strictly necessary and possibly, depending upon the application, can be omitted, whereby the insert 4 or the component parts thereof are directly attached to the ribs 9 or are produced in one piece herewith, for example such as shown in figure 7.

It is likewise clear that the number of auxiliary rods 5 utilized can vary in function of the application. The auxiliary rods 5 can as shown in figure 8 also be arranged along several walls 6 of the mould 1, depending upon the number of sides of the object 12 in which an insert 4 has to be applied. Of course a separate holder 3 can also be provided per auxiliary rod 5 placed next to each other.

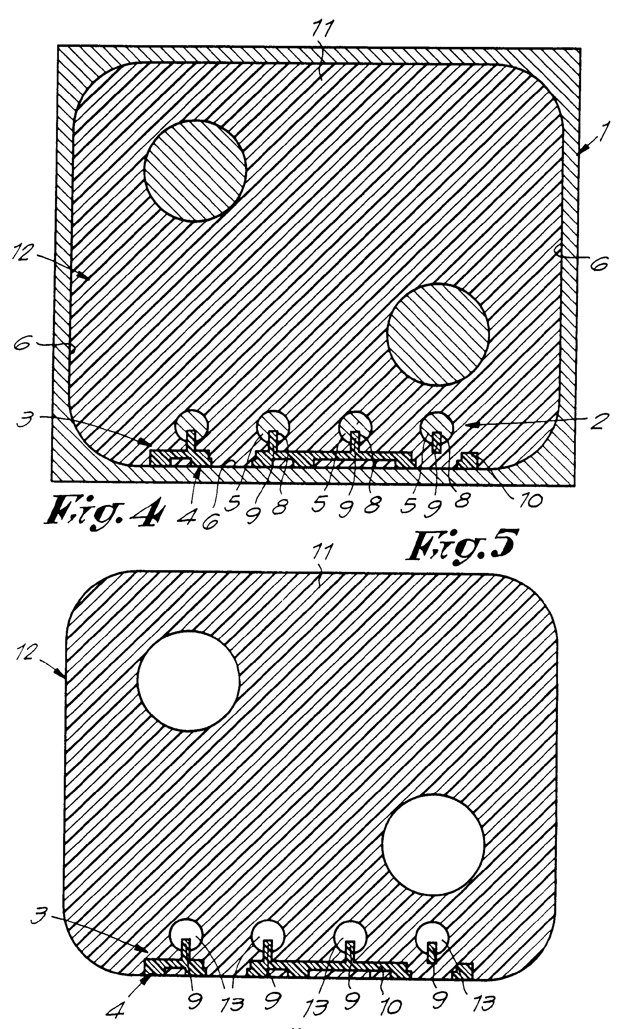

A variant is shown in figure 9, whereby the aforementioned supporting means 2 consist in vertical supporting plates 17 which are provided with grooves 8 or otherwise with which the ribs 9 of the holder 3 can work together.

According to yet another variant the supporting means 2 consist of the core piece 18 of the mould that is intended to create a hollow in the object to be formed in order to obtain a saving of material. For this purpose a suitable design must be given to the core piece 18, all of which such that as shown in figure 10 the holder 3 with the insert 4, respectively the holders 3 and the inserts 4, fit precisely between the wall 6 and the wall of the core piece 18. The wall of the core piece 18 can hereby be provided with grooves 8 or otherwise, as is respectively shown on one and the other side of the apparatus

It is clear that a combination of the aforementioned embedding techniques can be applied. An example of this is given in figure 11, whereby a holder 3 consisting of three ribs 9 is held on the one hand by means of two auxiliary rods 5 which are provided with grooves 8 and on the other hand, by the third rib 9, by means of the core piece 18.

The inserts can possibly also be embedded without making use of a holder 3.

In certain applications it is advantageous that the mould 1 is filled with two types of synthetic material 11A and 11B, for example as shown in figure 12. Hereby in a first step compact synthetic material is injected which presses against all walls of the mould and therefore also against the holder 3 and the back of the insert 4. Immediately after this, synthetic material together with a foaming agent are injected which maintain the compact synthetic material 11A pressed against the walls and even occupy the space still available in a cellular state, since as known with these synthetic materials during heating a gas is liberated in the synthetic material which as it were inflates the latter, through which a foamed synthetic material 11B is finally created. This process offers the advantage that the cost price of the object, in this case the pallet chock 12, remains relatively small because a smaller amount of compact synthetic material 11A is required, whereby nevertheless the good anchoring of the holder 3 and the insert 4 remains guaranteed, because these are incorporated in the compact synthetic material layer.

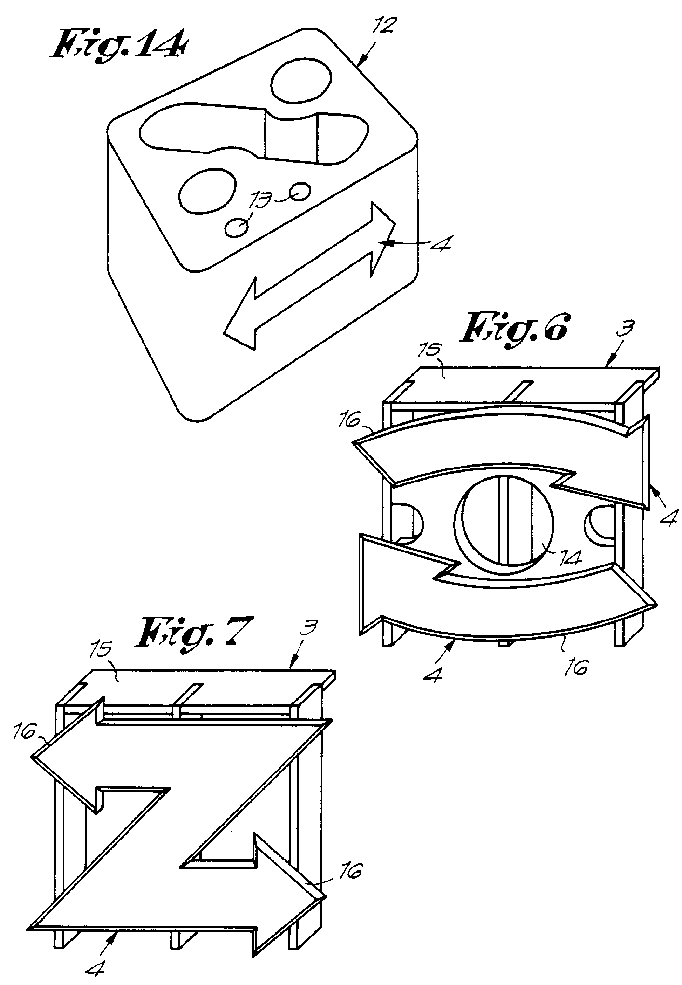

Figures 13 and 14 show by way of illustration, respectively in section and in perspective, the pallet chock 12 finally obtained.

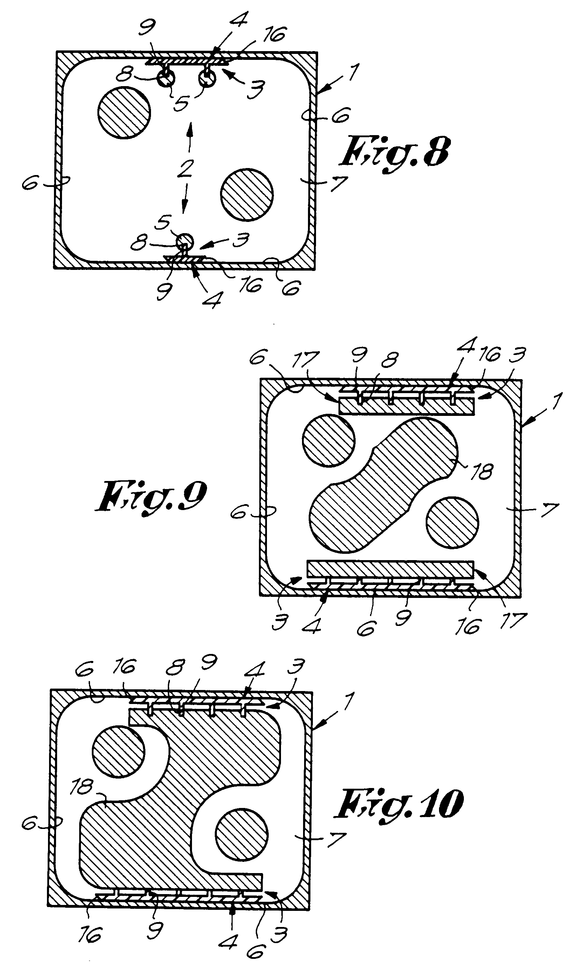

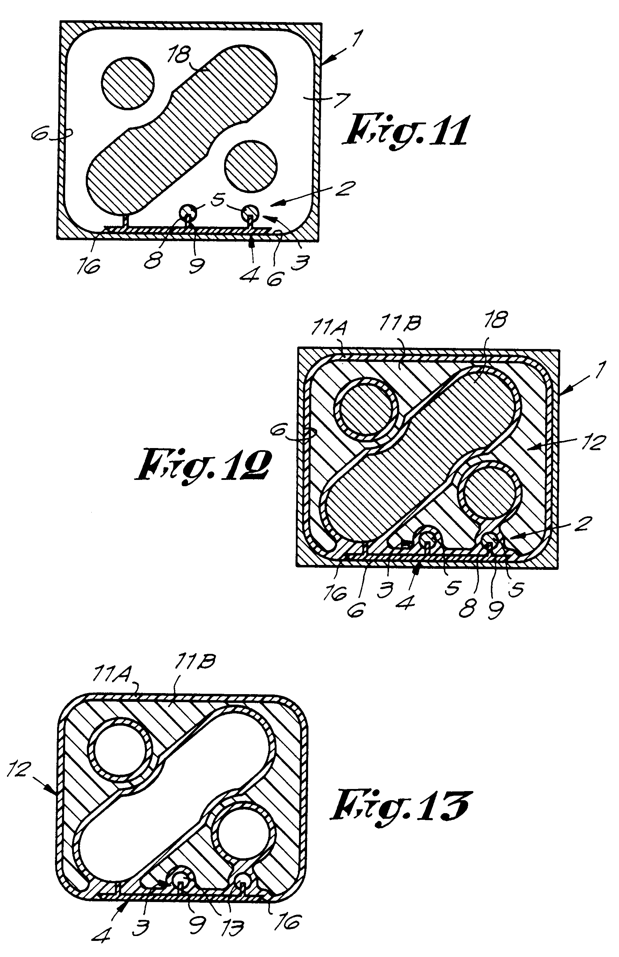

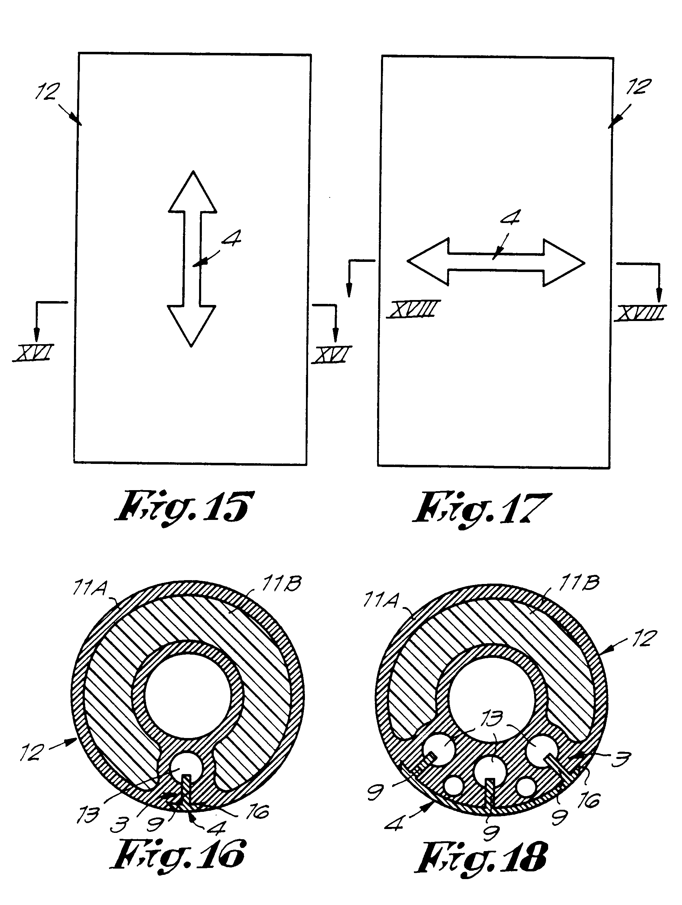

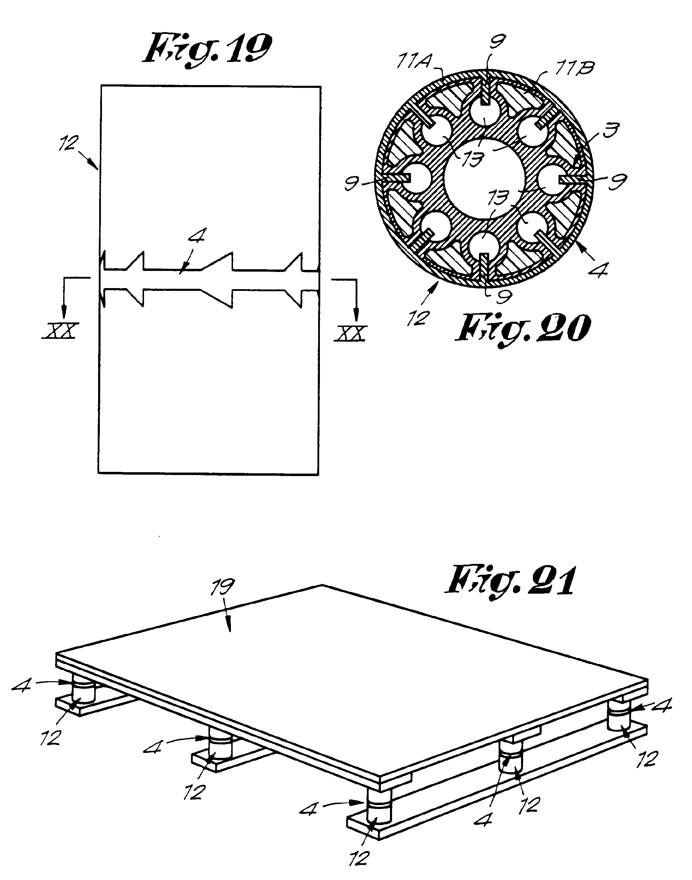

Figures 15 through 20 still show a number of variants of the pallet chocks by way of illustration, in which inserts 4 are applied according to the invention. In each case it hereby concerns a round pallet chock 12. According to figures 15 and 16 the symbol 4 extends vertically, according to figures 17 and 18 horizontally and according to figures 19 and 20 the insert 4 is produced continuous along the periphery of the pallet chock 12. Figure 21 shows a pallet 19 which utilizes pallet chocks 12 as shown in figure 19.

The present invention is not restricted to the embodiments described as examples and shown in the figures.

## Claims

1. Process for the application of inserts in objects of synthetic material, characterized in that it principally consists in providing a mould (1) comprising fixedly mounted supporting means (2), said supporting means (2) being located at a predetermined distance from a wall (6) of said mould; providing an insert (4), which may be mounted on a holder (3), said insert (4) and/or the holder (3) showing a dimension that it fits exactly between said wall (6) and said supporting means (2); placing said insert (4), when necessary with said holder (3), in the mould (1) by inserting it, by means of a sliding movement, between the wall (6) and the supporting means (2), said supporting means (2) holding the insert (4) in its final position; filling the mould (1) with synthetic material; and extracting the formed object (12) , comprising the insert (4) or the insert (4) on its holder (3), from the mould (1).

2. Process according to claim 1, characterized in that use is made of a holder (3) to which the insert (4) is attached, or with which it is produced in one piece, whereby the holder (3) and the insert (4) are so formed that they exactly fit between the wall (6) of the mould (1) and the supporting means (2).

3. Process according to any of the preceding claims, characterized in that use is made of an insert (4) that consists of synthetic material.

4. Process according to any of the preceding claims, characterized in that the insert (4) is produced in a material with a color which is different from the color of the object to be formed.

5. Process according to any of the preceding claims, characterized in that for the formation of the object (12) of synthetic material use is made of two types of synthetic material (11A,11B), respectively a compact synthetic material (11A) and a foamed synthetic material (11B), whereby the foamed synthetic material (11B) is injected into the mould (1) immediately after the compact synthetic material (11A).

6. Process according to any of the preceding claims, characterized in that use is made of an insert (4) which at its front side is provided of bevelled edges.

7. Apparatus for the application of inserts in objects in synthetic material according to the process of claim 1, characterized in that it principally consists of a mould (1) for moulding said object (12), said mould (1) being provided of supporting means (2) which are fixedly mounted in the mould (1), whereby these supporting means (2) and at least one wall (6) of the mould (1) provide in a well defined space, said space being adapted for mounting an insert (4) which is to be cast in the mould (1), whereby said insert (4) may be mounted on a holder.

8. Apparatus according to claim 7, characterized in that the aforementioned supporting means (2) consist of supports provided especially for that purpose in the mould (1).

9. Apparatus according to claim 8, characterized in that the supporting means (2) consist of at least one rod (5) which is parallel to the wall (6) of the mould (1).

10. Apparatus according to claim 8, characterized in that the supporting means (2) consist of at least one supporting plate (17) which is parallel to the wall (6) of the mould (1).

11. Apparatus according to claim 7, characterized in that the supporting means (2) at least partially consist of a core piece (18) of the mould (1).

12. Apparatus according to any of claims 7 to 11, characterized in that the supporting means (2) are provided with grooves (8), which form seats for ribs (9) of a holder (3).

13. Apparatus according to claim 12, characterized in that the supporting means (2) are mounted on the bottom (7) of the mould (1) and that the aforementioned grooves (8) extend to a well defined distance from the bottom (7).

14. Holder for fixing inserts in an apparatus as defined in claim 7, characterized in that it consists of at least one rib (9), which is intended to be perpendicular to the wall (6) of the mould (1) where the insert (4) has to be applied.

15. Holder according to claim 14, characterized in that it consists of several ribs (9) with an auxiliary frame (10) on which the insert (4) is applied, attached transversely hereto or produced in one piece herewith.

16. Holder according to claim 15, characterized in that the auxiliary frame (10) is provided of passage openings (14).

17. Holder according to any of claims 14 to 16, characterized in that a pushing plate (15) is installed on top of the ribs (9).

18. Product in which an insert is applied by means of the process according to any of the claims 1 to 5, characterized in that the product consists in a pallet chock.

## Patentansprüche

1. Verfahren für das Anbringen von Einsätzen in Gegenständen aus synthetischem Material, dadurch gekennzeichnet, daß es grundsätzlich aus dem Vorsehen einer Form (1) besteht, die fest montierte Stützmittel (2) aufweist, wobei besagte Stützmittel (2) sich in einem vorbestimmten Abstand zu einer Wand (6) besagter Form befinden; dem Vorsehen eines Einsatzes (4), der auf einer Halterung (3) montiert sein kann, wobei besagter Einsatz (4) und/oder die Halterung (3) eine solche Abmessung aufweist, daß er exakt zwischen besagte Wand (6) und besagte Stützmittel (2) paßt; dem Einfügen besagten Einsatzes (4), falls erforderlich, mit besagter Halterung (3), in die Form (1) durch Einsetzen, mittels einer Gleitbewegung, zwischen die Wand (6) und die Stützmittel (2), wobei besagte Stützmit- tel (2) den Einsatz (4) in seiner endgültigen Position halten; dem Füllen der Form (1) mit synthetischem Material; und dem Herausziehen des geformten Gegenstands (12), der den Einsatz (4), oder den Einsatz (4) auf seiner Halterung (3), umfaßt, aus der Form (1).

2. Verfahren gemäß Anspruch 1, dadurch gekennzeichnet, daß eine Halterung (3) verwendet wird, an welchem der Einsatz (4) befestigt ist, oder mit der er in einem Stück gefertigt ist, wobei die Halterung (3) und der Einsatz (4) so geformt sind, daß sie exakt zwischen die Wand (6) der Form (1) und die Stützmittel (2) passen.

3. Verfahren gemäß einem der vorgenannten Ansprüche, dadurch gekennzeichnet, daß ein Einsatz (4) verwendet wird, der aus synthetischem Material besteht.

4. Verfahren gemäß einem der vorgenannten Ansprüche, dadurch gekennzeichnet, daß der Einsatz (4) aus einem Material mit einer Farbe, die sich von der Farbe des zu formenden Gegenstands unterscheidet, hergestellt ist.

5. Verfahren gemäß einem der vorgenannten Ansprüche, dadurch gekennzeichnet, daß für die Formung des Gegenstands (12) aus synthetischem Material zwei Typen von synthetischem Material (11A,11B) verwendet werden, beziehungsweise ein kompaktes synthetisches Material (11A) und ein geschäumtes synthetisches Material (11B), wobei das geschäumte synthetische Material (11B) sofort nach dem kompakten synthetischen Material (11A) in die Form (1) eingespritzt wird.

6. Verfahren gemäß einem der vorgenannten Ansprüche, dadurch gekennzeichnet, daß ein Einsatz (4) verwendet wird, der an seiner Vorderseits mit abgeschrägten Kanten versehen ist.

7. Vorrichtung für das Anbringen von Einsätzen in Gegenständen aus synthetischem Material gemäß dem Verfahren von Anspruch 1, dadurch gekennzeichnet, daß sie in der Hauptsache aus einer Form (1) zum Formen besagten Gegenstands (12) besteht, wobei besagte Form (1) mit Stützmitteln (2) versehen ist, die fest in der Form (1) montiert sind, wobei diese Stützmittel (2) und zumindest eine Wand (6) der Form (1) einen bestimmten Raum vorsehen, der für die Montage eines Einsatzes (4) geeignet ist, welcher in der Form (1) angebracht werden soll, wobei besagter Einsatz (4) auf einer Halterung montiert sein kann.

8. Vorrichtung gemäß Anspruch 7, dadurch gekennzeichnet, daß die vorgenannten Stützmittel (2) aus speziell für diesen Zweck in der Form (1) angebrachten Stützen bestehen.

9. Vorrichtung gemäß Anspruch 8, dadurch gekennzeichnet, daß die Stützmittel (2) aus zumindest einem Stab (5) bestehen, der parallel zur Wand (6) der Form (1) ist.

10. Vorrichtung gemäß Anspruch 8, dadurch gekennzeichnet, daß die Stützmittel (2) aus zumindest einer Stützplatte (17) bestehen, die parallel zur Wand (6) der Form (1) ist.

11. Vorrichtung gemäß Anspruch 7, dadurch gekennzeichnet, daß die Stützmittel (2) zumindest teilweise aus einem Kernstück (18) der Form (1) bestehen.

12. Vorrichtung gemäß einem der Ansprüche 7 bis 11, dadurch gekennzeichnet, daß die Stützmittel (2) mit Nuten (8) versehen sind, die Sitze für Rippen (9) einer Halterung (3) formen.

13. Vorrichtung gemäß Anspruch 12, dadurch gekennzeichnet, daß die Stützmittel (2) auf dem Boden (7) der Form (1) montiert sind und daß die vorgenannten Nuten (8) sich bis zu einem bestimmten Abstand vom Boden (7) erstrecken.

14. Halterung zum Befestigen von Einsätzen in einer Vorrichtung wie in Anspruch 7 definiert, dadurch gekennzeichnet, daß sie aus zumindest einer Rippe (9) besteht, die senkrecht zu der Wand (6) der Form (1) stehen soll, wo der Einsatz (4) angebracht werden soll.

15. Halterung gemäß Anspruch 14, dadurch gekennzeichnet, daß sie aus mehreren Rippen (9) mit einem Hilfsrahmen (10), auf dem der Einsatz (4) angebracht ist, besteht, der quer dazu angebracht oder in einem Stück damit gefertigt ist.

16. Halterung gemäß Anspruch 15, dadurch gekennzeichnet, daß der Hilfsrahmen (10) mit Durchlaßöffnungen (14) versehen ist.

17. Halterung gemäß einem der Ansprüche 14 bis 16, dadurch gekennzeichnet, daß eine Stoßplatte (15) oben auf den Rippen (9) angebracht ist.

18. Produkt, in welchem ein Einsatz mittels des Verfahrens gemäß einem der Ansprüche 1 bis 5 angebracht ist, dadurch gekennzeichnet, daß das Produkt ein Palettenklotz ist.

## Revendications

1. Procédé pour l'application de pièces rapportées dans des objets en matière synthétique, caractérisé en ce qu'il consiste principalement à : procurer un moule (1) comprenant des moyens de support (2) montés à demeure, lesdits moyens de support (2) étant disposés à une distance prédéterminée d'une paroi (6) dudit moule; procurer une pièce rapportée (4) qui peut être montée sur un dispositif de maintien (3), ladite pièce rapportée (4) et/ou le dispositif de maintien (3) représentant une dimension telle qu' ils viennent s'insérer exactement entre ladite paroi (6) et lesdits moyens de support (2); placer ladite pièce rapportée (4), si nécessaire avec ledit dispositif de maintien (3), dans le moule (1) en l'insérant au moyen d'un mouvement coulissant entre la paroi (6) et les moyens de support (2), lesdits moyens de support (2) maintenant la pièce rapportée (4) dans sa position finale; remplir le moule (1) avec de la matière synthétique; et extraire l'objet façonné (12) comprenant la pièce rapportée (4) ou la pièce rapportée (4) sur son dispositif de maintien (3) hors du moule (1).

2. Procédé selon la revendication 1, caractérisé en ce qu'on utilise un dispositif de maintien (3) auquel est fixée la pièce rapportée (4) ou avec lequel elle est fabriquée en une seule pièce, le dispositif de maintien (3) et la pièce rapportée (4) étant façonnés de telle sorte qu'ils viennent s'insérer exactement entre la paroi (6) du moule (1) et les moyens de support (2).

3. Procédé selon l'une quelconques des revendications précédentes, caractérisé en ce qu'on utilise une pièce rapportée (4) qui consiste en une matière synthétique.

4. Procédé selon l'une quelconques des revendications précédentes, caractérisé en ce que la pièce rapportée (4) est fabriquée en une matière dont la couleur est différente de la couleur de l'objet à façonner.

5. Procédé selon l'une quelconques des revendications précédentes, caractérisé en ce que, pour le façonnage de l'objet (12) en matière synthétique, on utilise deux types de matières synthétiques (11A, 11B), respectivement une matière synthétique compacte (11A) et une matière synthétique en mousse (11B), la matière synthétique en mousse (11B) étant injectée dans le moule (1) immédiatement après la matière synthétique compacte (11A).

6. Procédé selon l'une quelconques des revendications précédentes, caractérisé en ce qu'on utilise une pièce rapportée (4) qui est munie, sur son côté frontal, de bords chanfreinés.

7. Appareil pour l'application de pièces rapportées dans des objets en matière synthétique conformément au procédé selon la revendication 1, caractérisé en ce qu'il consiste principalement en un moule (1) pour mouler ledit objet (12), ledit moule (1) étant équipé de moyens de support (2) qui sont montés à demeure dans le moule (1), ces moyens de support (2) et au moins une paroi (6) du moule (1) procurant un espace bien défini, ledit espace étant conçu pour y monter une pièce rapportée (4) qui doit être moulée dans le moule (1), ladite pièce rapportée (4) pouvant être montée sur un dispositif de maintien.

8. Appareil selon la revendication 7, caractérisé en ce que les moyens de support susmentionnés (2) consistent en supports prévus spécifiquement à cet effet dans le moule (1).

9. Appareil selon la revendication 8, caractérisé en ce que les moyens de support (2) consistent en au moins une tige (5) qui est parallèle à la paroi (6) du moule (1).

10. Appareil selon la revendication 8, caractérisé en ce que les moyens de support (2) consistent en au moins une plaque de support (17) qui est parallèle à la paroi (6) du moule (1).

11. Appareil selon la revendication 7, caractérisé en ce que les moyens de support (2) consistent au moins partiellement en une pièce de noyau (18) du moule (1).

12. Appareil selon l'une quelconque des revendications 7 à 11, caractérisé en ce que les moyens de support (2) sont munis de rainures (8) qui forment des sièges pour des nervures (9) d'un dispositif de maintien (3).

13. Appareil selon la revendication 12, caractérisé en ce que les moyens de support (2) sont montés au fond (7) du moule (1) et en ce que les rainures susmentionnées (8) s'étendent sur une distance bien définie par rapport au fond (7).

14. Dispositif de maintien pour fixer des pièces rapportées dans un appareil tel que défini à la revendication 7, caractérisé en ce qu'il consiste en au moins une nervure (9) qui est destinée à être perpendiculaire à la paroi (6) du moule (1) où la pièce rapportée (4) doit être appliquée.

15. Dispositif de maintien selon la revendication 14, caractérisé en ce qu'il consiste en plusieurs nervures (9) munies d'un cadre auxiliaire (10) sur lequel on applique la pièce rapportée (4), fixé transversalement aux premières citées ou fabriqué en une seule pièce avec elles.

16. Dispositif de maintien selon la revendication 15, caractérisé en ce que le cadre auxiliaire (10) est équipé d'ouvertures de passage (14).

17. Dispositif de maintien selon l'une quelconque des revendications 14 à 16, caractérisé en ce qu'une plaque de poussée (15) est installée au sommet des nervures (9).

18. Produit dans lequel on applique une pièce rapportée au moyen du procédé selon l'une quelconque des revendications 1 à 5, caractérisé en ce que le produit consiste en une cale de palette.
